# EUROPEAN PATENT APPLICATION

(11) **EP 4 151 401 A1**
(43) Date of publication of application: **22.03.2023**
(21) Application number: 21804520.1
(22) Date of filing: 10.05.2021
(51) Int. Cl.: B32B 9/00, B61D 17/00

(54) **REDUCED-WEIGHT WAGON COMPONENTS, METHODS FOR PRODUCING SAME, AND REDUCED-WEIGHT WAGON**

(30) Priority: 11.05.2020 BR 102020009301; 12.08.2020 BR 102020016453
(71) Applicant: N3F Projetos Em Compósito Ltda, 85520-400 Curitiba - PR (BR)
(72) Inventor: MOURA COSTA, Estevão, 25550350 São João de Meriti (BR); NACIFF FREITAS, Anselmo, 2620 SJ 10 Vilar dos Teles - RJ (BR); PLACIDO TEIXEIRA DA SILVA, Rafael, 25550350 São João de Meriti (BR)
(74) Representative: Schneiter, Sorin
(86) International application number: PCT/BR2021/050194
(87) International publication number: WO 2021/226691

(57) **Abstract**

The present invention relates to the field of materials science, applied to the body of a wagon for transporting loads, also including the systems of hoppers and hatches, if applicable, manufactured from composite materials that provide reduced weight in comparison to the similar conventional parts thereof manufactured from steel.

The present invention also relates to the development of wagon bodies and the systems thereof such as hoppers and hatches, if applicable, which dispense with the need to use structural metal materials, contributing to the reduced weight thereof, providing lightness during operation and corrosion resistance, and to a specific design, which makes the lightweight material capable of withstanding the loads and forces to which the wagons are subjected during operation.

## Description

### Field of Invention

The present invention relates to the field of materials science, applied to the body of a wagon for transporting loads, also including the systems of hoppers and hatches, if applicable, manufactured from composite materials that provide reduced weight in comparison to the similar conventional parts thereof manufactured from steel.

The present invention also relates to the development of wagon bodies and the systems thereof such as hoppers and hatches, if applicable, which dispense with the need to use structural metal materials, contributing to the reduced weight thereof, providing lightness during operation and corrosion resistance, and to a specific design, which makes the lightweight material capable of withstanding the loads and forces to which the wagons are subjected during operation.

### Background of the Invention

The existing wagon bodies are currently made of steel and present as the main inconvenience corrosion problems, and consequently infiltration, since the wagon plates deteriorate with corrosion and may present sealing problems allowing water to enter the load.

The rail logistics sector has been looking for innovative solutions for years to reduce the weight of the freight wagons bodies as a whole, not only to reduce their fuel consumption, but also to reduce their O&M costs. This weight reduction of the wagon body provides an alternative gains for the transport company, being able to choose (i) in the reduction of fuel consumption by the locomotives, due to the reduction of the total weight of the composition by the reduction of the tare of the wagons of this invention and , (ii) increase in the load transported using the same amount of power in the traction rail vehicle, that is, more wagons can be inserted in the composition, compensating for the reduction in the dead weight of the wagons, thus increasing the financial return of the transport.

In order to solve these problems, there has been an attempt to develop lighter freight cars that at the same time support the loads being transported. Some of the solutions developed in the state of the art are mentioned below.

MU 8603013-2 discloses a rail car body with reduced weight through the application of structural tubes. However, these tubes are made of metallic material. The present invention differs from that document in that it uses only composite material in the manufacture of the wagon body of the present invention, without any metallic component and does not require any metallic structural reinforcement.

Document US 2016/311611 describes a lightweight container, where weight reduction is provided by an exoskeleton (external structures) of composite material, such as a fiber-reinforced polymer and a box formed by a metal sheet, such as for example steel. The composite material used in the manufacture of the wagon body of the present invention does not have any metallic component and does not require any metallic structural reinforcement.

Document US 2008/035014 describes lightweight bulk carriers. The proposed weight reduction is achieved by reducing the weight of structural components and reinforcing specific areas that tend to accumulate stress. The present invention differs from that document in that it is not limited to altering structural components of the wagon, but rather proposes a new freight wagon body, made entirely of composite material capable of withstanding the stress caused by the load throughout its structure.

Document US 2020/055276 describes a lightweight composite material for use in the automotive, railroad, aircraft and naval sectors, citing at all times about its application with flame retardant characteristics. The present invention differs from this document in that it does not require a multilayer composite material, but rather the development and its technological and economic feasibility for the manufacture of wagon bodies, entirely manufactured in non-metallic composite material, combining the development of specific designs and manufacturing processes for composite materials, containing a core and a finishing outer coating.

Therefore, it can be seen that the state of the art does not describe or even suggest a body for a railroad freight car made of composite materials, capable of allowing a reduction in the weight of the wagon body while keeping all the others properties related to wagon strength and capacity.

### Summary of the Invention

In a first aspect the present invention provides lightweight wagon components manufactured from composite materials.

It is, therefore, an object of the present invention, the concept of manufacturing the wagon body and its subsystems with:
a) a first layer of a thermosetting and/or thermoplastic polymeric resin; and structuring fibers, preferably fiberglass and/or reinforcing fabrics;
b) a second layer, adjacent to the first layer, comprising a structuring and/or thermal insulating core, which comprises: a polymeric foam;
c) a third layer, adjacent to the second layer, of a thermosetting and/or thermoplastic polymeric resin; and structuring fibers, preferably fiberglass and/or reinforcing fabrics;
wherein the fibers and/or reinforcing fabrics of the thermosetting and/or thermoplastic polymeric resin layers make up from 20% w/w to 80% w/w of the total weight of the outer coating.

The present invention has as advantages over its corresponding and conventional models in steel and/or cast iron, its reduced weight (which can be up to 80% lighter) and can be reused after the end of its lifespan, estimated above 15 years, while conventional steel hatches have a lifespan of around 10 years in operations.

### Brief Description of Figures

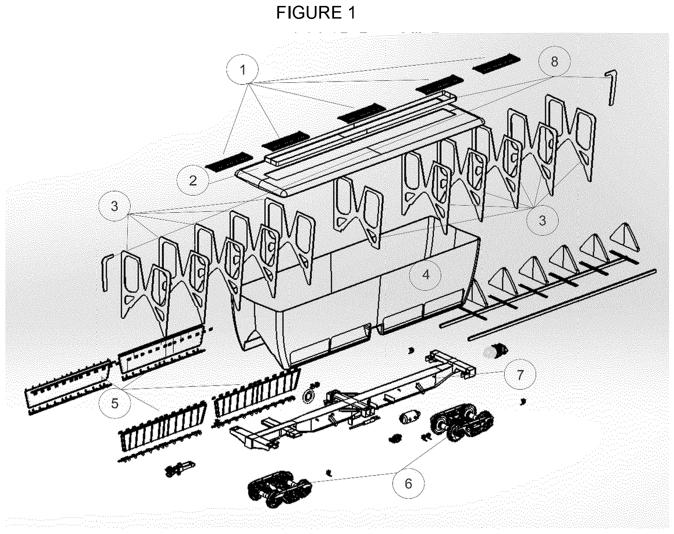

Figure 1 shows an exploded view of an embodiment of the wagon manufactured in composite materials. (1) Hatch: is the upper opening system used for loading the wagon. This system may not exist in wagosn without a roof. The present invention can also be applied in these cases; (2) Ceiling: upper body of the wagon body and its reinforcements; (3) Structural bulkheads: they are transverse structures positioned along the wagon body to increase the structure's rigidity; (4) Body of the box: it is the body of the box below the ceiling including the walls and floor of the wagon; (5) Hoppers: it is the wagon body unloading system, which can be lower or lateral. There are wagons that do not have hoppers, the present invention can also be applied in these cases; (6) Truck: it is the system that supports the platform and the body of the wagon on the rail, it has the brake and suspension system; (7) Central beam with platform or chassis: it is the lower structure of the wagon body where the wagon systems are connected, such as the brake system, shock and traction device, among other systems when necessary. In addition, it is the structure responsible for withstanding the impact arising from the shock and traction between wagons and locomotives in transport; (8) Body Reinforcements: Body Reinforcements are parts designed to give rigidity to the body in composite materials. They may be longitudinal or transverse and it is recommended to use composite materials such as those of the present invention. They can be arranged on walls, ceilings or floors according to the structural design of the wagon body.

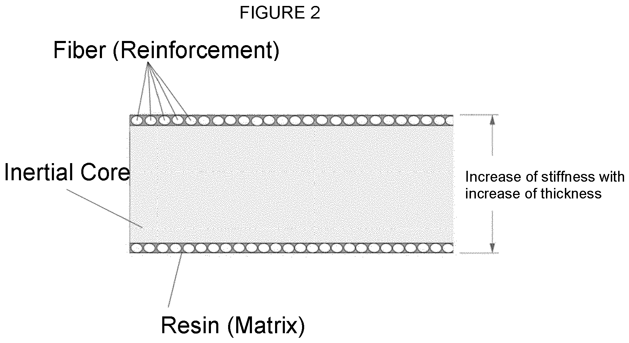

Figure 2 presents an outline of the sandwich concept used in the present invention.

### Detailed Description of the Invention

The following paragraphs are intended to exemplify some of the numerous embodiments of the present invention, and should be understood as non-limiting examples. Alternative embodiments not described, but within the central idea of the invention, should be understood as within the scope of the present invention.

The composite materials of this invention are combinations of polymeric matrix with reinforcements. Thermoplastic or thermosetting resins are used as matrix. As for the reinforcements, glass fibers are used, but not limited to this fiber.

The present invention describes wagon components of composite materials, as shown in Figure 1, which provide a reduced weight in the final wagon. In particular the components according to the present invention comprise:
a) a first layer of a thermosetting and/or thermoplastic polymeric resin; and structuring fibers, preferably fiberglass and/or reinforcing fabrics;
b) a second layer, adjacent to the first layer, comprising a structuring and/or thermal insulating core, which comprises: a polymeric foam;
c) a third layer, adjacent to the second layer, of a thermosetting and/or thermoplastic polymeric resin; and structuring fibers, preferably fiberglass and/or reinforcing fabrics;
wherein the fibers and/or reinforcing fabrics of the thermosetting and/or thermoplastic polymeric resin layers make up from 20% w/w to 80% w/w of the total weight of the outer coating.

The polymeric foam has the structuring and thermal insulation function to the wagon body. The foams of the present invention are preferably composed of PET structural foam and/or PVC foam, although other suitable materials are also within the scope of the present invention such as plywood. Plywood or wood can be used in regions of the wagon body that have higher shear loads, such as, for example, areas where the body is attached to the central beam.

Structural reinforcement foams provide a significant increase in strength without providing a significant increase in the final weight of the material. The foams considerably increase the thickness of the part's profile and consequently the moment of inertia of the structure, making the part more rigid with lightness.

The thermosetting polymeric resin of the external coating can be chosen from orthophthalic resins, isophthalic resins, bisphenolic resins or vinyl ester resins, such as polyester resins, epoxy, thermoplastic resins can also be used in the matrix.

Laminated composite materials have a fiber percentage in the range of 20% w/w to 80% w/w of the total weight of the laminated layers, with a value of 60% w/w being preferred.

In principle, any component of Figure 1 can be manufactured in the composite materials of the present invention, however, the wagon body, the hatches and the hoppers are preferred, the latter two when the wagon has them.

Composite materials reduce the weight of the wagon body to up to 80% the weight compared to traditional steel-built wagon. In addition, composite materials combined with certain polymers allow chemical resistance and oxidation resistance, reducing wagon wear due to corrosion, especially in the case of fertilizer loads with a high sulfur content.

This wagon body manufacturing concept can be applied in Hopper type wagons, but not limited to this type of wagon, and can also be used in the design of gondola, tank, closed, refrigerated wagons, among others types of wagons.

The concept of sandwich material (or structuring core with external coating) can be used in the design of the body of the box, ceiling, hatches, hoppers and bulkheads of the box of the wagon, not limited to these parts. The concept of sandwich material (or structuring core with external coating) is present in nature, as for example, the structural concept of bones, where we have the external surface of the bone more reinforced with calcified cells and the internal part a spongy structure and less stiffness. In the same way, the wall of the wagon is laminated at both ends of fiber with plastic resins (most rigid part) and a structural foam or core is placed in the central layer.

Structural foam can be PET, PVC or even PU, not limited to these materials. The sandwich concept (or structuring core with external coating) aims at structural optimization by placing a material that is less rigid in the center and more rigid at the ends (or around it). In this way, it is possible to increase the thickness of the material without increasing the weight. Consequently, increasing the thickness of the material increases the moment of inertia of the part providing more rigidity with less weight. Figure 02 presents an outline of this concept applied in the design of the present invention.

In the present invention it is important to consider, in the geometric design of the wagon body in composites, rounded geometries that soften or better distribute the loading stresses. Due to the ease of fabrication of complex geometries by composites, this feature must be taken advantage of to achieve a structurally optimized wagon body geometry.

The design of the structural project of the present invention followed the standard AAR SECTION C PART II DESIGN, FABRICATION, AND CONSTRUCTION OF FREIGHT CARS, M-1001. However, the present invention can follow other freight car design standards for rail car calculation and design, such as those of the Ministry of Railways of the Russian Federation for 1520 mm gauge. In addition to government regulations, this invention can meet specific criteria defined by rail transport operator customers.

Likewise, the present invention can be applied in wagon projects of different gauges, such as the Standard gauge (1435 mmm) or the Wide gauge (1.60 m).

The sizing of thicknesses of laminated composites and foams can be done through Finite Element Analysis. Finite Element Analysis can be used to apply the loads described in railcar construction standards. By applying these loads to the body model, it is possible to dimension and quantify the reinforcements in the ceilings, the bulkheads, the core thicknesses, and the thicknesses of laminates in composite materials.

Using this analysis it is possible to reinforce the parts of the wagon body regions that suffer greater displacement during the application of loads in the Finite Element Analysis.

The wagon bodies of the present invention can also include hydraulic and/or pneumatic movement mechanisms, which provide several benefits in the loading and unloading operation, such as: higher operating speed.

The manufacture of parts in composite materials is wide and the composite parts of the components of the wagon can be designed by the processes of manual lamination (Hand Lay-up), manual lamination with vacuum, infusion, spray up, Resin Transfer Molding Light (RTM Light), Vacuum Pressure Impregnation (VPI), pultrusion, extrusion, injection, not limited to these processes only. These composite lamination processes allow the impregnation and polymerization of the matrix into the fibers and reinforcements and can be used in the design of the roof, reinforcements, wagon body, hopper, hatches and even the chassis.

In the vacuum infusion process, the percentage of fiber in the final finishing coating can vary from 50% to 80%, with the value of 60% of fiber being proven to have the best results However, other processes such as manual or spray-up reduces this percentage range.

From the information above, it is possible to observe that the vacuum infusion process obtains a higher percentage of fiber in the laminate, resulting in greater mechanical strength of the body of the freight car. The higher percentage of fiber also influences the preparation of lighter laminates, which is the main objective of the present invention. In addition to these advantages, the higher percentage of fiber in the vacuum infusion means a lower percentage of resin, that is, this process has a resin economy that generates cost savings compared to other manufacturing processes.

To give a polished finish on the outside of the wagon body, without marks on the fiber fabric, gel coat and laminate fiberglass blanket can be used, or laminate blasted perforated roving wire (spray up) on the external face of the parts in contact with the external environment. Giving a polished finish to the part when using polished molds.

When necessary, with the part of the pieces of the wagon body that contact with the load must be used products that give the necessary finishing to the load to be transported in the wagon. For example, in granular loads, products that increase abrasion resistance and give a smooth or polished finish can be applied internally.

Adhesives in composites can be used to unite the parts of the wagon box, such as resins with microspheres. In addition, when possible, it is important to use laminated fiber fabric in the joints of these parts in order to increase the bonding strength of the parts.

In the joints between the box and the central beam, platform or chassis, threaded pins can be used. It is worth remembering that in these regions of joining parts in composite materials with steel will be reinforced regions. These reinforcements can be plywood or laminated with composite materials and adhesives. In this way, it is possible to guarantee the resistance of the forces acting between the steel structure and the composite box.

In view of their thermal insulation capacity, when applicable in the transport of grains, they are capable of delaying their ripening, extending their lifespan and enhancing their commercialization.

Its thermal insulating properties and its surface free from roughness, when used in the transport of sugar, help to reduce the scorching effect, which occurs on the walls of traditional steel wagons, due to the combination of high temperature and moisture.

The characteristics and properties of its thermal insulation, also allows the manufacture of refrigerated cargo wagon bodies for the transport of perishable or frozen products, with the coupling of a proper and adequate refrigeration system.

The present invention has numerous combinations of volume, capacity and types of load, from its design model to be developed to the construction of its prefabrication molds, allowing the manufacture of freight car boxes with capacities expanded to up to 200 tons, just by analyzing the technical conditions of the railway lines on which it will circulate.

The present invention has numerous technical and mainly economic and socio-environmental benefits, such as: lower removal weight in the event of an accident (tipping), lower fuel consumption per ton transported, reduction of CO₂ emissions, longer life of the grain load, enabling transport of perishable frozen cargo, not an electrical conductor, not being possible to suffer atmospheric electrical discharges, dangerous to human beings in the loading and unloading operation.

In conclusion, it can be said that the invention, due to its technological innovations and socio-environmental and socio-economic advantages, mainly the reduction of emissions of tons of CO₂ obtained with the economy of diesel consumption and the use of PET recyclable material, where studies prepared by the WWF - World Wide Fund for Nature, a Non-Governmental Organization (NGO) founded in Switzerland on 04/29/61, point out that the pollution of the oceans, main factor in raising the temperature of ocean waters, it is also the main cause of recent climate change recorded on our planet, it has already reached alarming levels and urgent measures need to be taken by governments and inhabitants of all nations of the world.

## Claims

1. Wagon component with reduced weight **characterized by** comprising:
a) a first layer of a thermosetting and/or thermoplastic polymeric resin; and structuring fibers;
b) a second layer, adjacent to the first layer, comprising a structuring and/or thermal insulating core, which comprises: a polymeric foam;
c) a third layer, adjacent to the second layer, of a thermosetting and/or thermoplastic polymeric resin; and structuring fibers, preferably fiberglass and/or reinforcing fabrics;
wherein the fibers and/or reinforcing fabrics of the thermosetting and/or thermoplastic polymeric resin layers make up from 20% w/w to 80% w/w of the total weight of the outer coating.

2. Wagon component according to claim 1, **characterized in that** the foam is PET foam and/or PVC foam.

3. Wagon component, according to claim 1, **characterized in that** the structuring fibers are chosen from among glass fiber, carbon fiber and combinations thereof and/or reinforcing fabrics.

4. Wagon component, according to claim 1, **characterized in that** the thermosetting and/or thermoplastic polymeric resin is one of vinyl resins, polyester resins, or a combination of the two.

5. Wagon component, according to claim 1, **characterized in that** the fibers and/or reinforcement fabrics of the outer covering make up 60% w/w of the total weight of the outer coating.

6. Wagon component, according to claim 1, **characterized in that** the outer coating is a composite laminated by vacuum and/or vacuum infusion, involving its entire core in the casing style.

7. Railway wagon **characterized in that** it comprises at least one lightweight component as defined in any one of claims 1 to 6.
